# FASCICULE DE BREVET EUROPEEN

(11) **EP 3 025 770 B1**
(45) Date de publication et mention de la délivrance du brevet: **25.01.2017**
(21) Numéro de dépôt: 15194270.3
(22) Date de dépôt: 12.11.2015
(51) Int. Cl.: A63H 27/00, A63H 30/04, A63G 31/16

(54) **SYSTÈME VIDEO POUR LE PILOTAGE D'UN DRONE EN MODE IMMERSIF**
VIDEOSYSTEM ZUM STEUERN EINER DROHNE IM IMMERSIONMODUS
VIDEO SYSTEM FOR PILOTING A DRONE IN IMMERSIVE MODE

(30) Priorité: 26.11.2014 FR 1461501
(43) Date de publication de la demande: 01.06.2016
(73) Titulaire: Parrot Drones, 75010 Paris (FR)
(72) Inventeur: SEYDOUX, Henri, 75017 PARIS (FR); FLORENTZ, Gaspard, 75010 PARIS (FR)
(74) Mandataire: Dupuis-Latour, Dominique

(56) Documents cités:
- EP-A1- 2 364 757
- EP-A2- 2 557 468
- WO-A1-98/46014
- FR-A1- 2 922 666
- JP-A- 2010 152 835
- US-A- 3 564 134

## Description

L'invention concerne les appareils motorisés pilotés à distance, ci-après désignés généralement sous la dénomination de "drones".

Il peut s'agir de drones volants, notamment de drones à voilure tournante tels que des hélicoptères, quadricoptères et analogues. Mais l'invention n'est toutefois pas limitée au pilotage et à l'échange de données avec des appareils volants ; elle s'applique aussi bien à des appareils roulants évoluant sur le sol sous le contrôle d'un utilisateur distant, le terme de "drone" devant être entendu dans son acception la plus générale.

Un exemple typique de drone volant est le *AR.Drone 2.0* ou le *Bebop* de la société Parrot SA, Paris, France, qui sont des quadricoptères équipés d'une série de capteurs (accéléromètres, gyromètres trois axes, altimètre), d'une caméra frontale captant une image de la scène vers laquelle est dirigé le drone, et d'une caméra de visée verticale captant une image du terrain survolé.

Les documents WO 2010/061099 A2 et EP 2 364 757 A1 (Parrot SA) décrivent un tel drone ainsi que son principe de pilotage par l'intermédiaire d'un appareil à écran tactile et accéléromètre intégré, par exemple un *smartphone* de type *iPhone* ou une tablette de type *iPad* (marques déposées). Ces appareils incorporent les divers organes de contrôle nécessaires à la détection des commandes de pilotage et à l'échange bidirectionnel de données avec le drone via une liaison sans fil de type réseau local Wi-Fi (IEEE 802.11) ou Bluetooth. Ils sont en outre pourvus d'un écran tactile affichant l'image captée par la caméra frontale du drone, avec en superposition un certain nombre de symboles permettant l'activation de commandes par simple contact du doigt de l'utilisateur sur cet écran tactile.

La caméra video frontale du drone est notamment utilisable pour un pilotage en "mode immersif" ou FPV (*First-Person View*), c'est-à-dire où l'utilisateur se sert de l'image de la caméra de la même façon que s'il se trouvait lui-même à bord du drone. Elle peut également servir à capter des séquences d'images d'une scène vers laquelle se dirige le drone. L'utilisateur peut ainsi se servir du drone de la même façon que d'une caméra ou d'un caméscope qui, au lieu d'être tenu à la main, serait porté par le drone. Les images recueillies peuvent être enregistrées, diffusées, mises en ligne sur des sites web, envoyées à d'autres internautes, partagées sur des réseaux sociaux, etc.

Pour bien filmer le vol, il est d'abord nécessaire disposer d'une caméra orientable et stabilisée. On peut monter à cet effet la caméra sur un système à la Cardan, ou encore prévoir une stabilisation électronique d'image.

Toutefois, un tel retour d'image stabilisé obtenu à partir de la caméra de prise de vues du drone n'est pas idéal pour ce type de pilotage en FPV. En particulier, la stabilisation de l'image fait qu'elle ne reflète plus au pilote les informations essentielles telles que l'assiette de l'aéronef. Et, plus particulièrement dans le cas d'un drone à vol stationnaire tel qu'un quadricoptère, le retour image conventionnel de la caméra de prise de vues n'est pas très intéressant. En effet, on cherche avec un tel drone à manoeuvrer au plus près des obstacles, par exemple pour filmer un point en volant entre les piles d'un pont.

Il est ainsi souhaitable que le pilote puisse dans un tel cas "donner un coup d'oeil" à gauche et à droite pendant la prise de vues avec la caméra à images stabilisées.

Dans un dispositif FPV classique, la paire de lunettes à réalité virtuelle est équipée d'un gyroscope et d'un accéléromètre de manière à prendre en compte les déplacements de la tête de l'utilisateur. Le principe de fonctionnement conventionnel comprend les étapes suivantes :
a) mesure du mouvement de la tête du pilote ;
b) envoi de la nouvelle position de la tête du pilote au drone ;
c) déplacement du point de vue de la caméra du drone en fonction de la nouvelle position de la tête du pilote ;
d) acquisition d'une image ;
e) retraitement de l'image dans le cas où la caméra possède une optique très déformante telle qu'une lentille de type *fisheye* ;
f) encodage de l'image video ;
g) transmission de l'image vidéo du drone à la station au sol ;
h) décodage de l'image vidéo par la station au sol ; et
i) reprojection de l'image vidéo par la station au sol pour chacun des yeux.

Une telle technique de contrôle de l'orientation de la caméra à partir de capteurs montés sur une paire de lunettes FPV à réalité virtuelle est notamment décrite dans le EP 2 557 468 A2.

Chacune des étapes ci-dessus prend un certain temps et, même avec les moyens électroniques actuels, il est très difficile d'effectuer cet ensemble d'étapes en moins de 200 ms (soit six images pour une cadence image ou *framerate* de 30 images/seconde), principalement à cause des temps de transfert de données aux étapes b) et g). Cette latence se manifeste par un manque de corrélation entre les mouvements de la tête du pilote et l'image affichée dans les lunettes à réalité virtuelle, ce qui provoque souvent des nausées pour l'utilisateur.

Une solution pour éviter ce problème pourrait consister à capturer une image sur 360° sur le drone et à la transférer directement à la station au sol. De ce fait, les étapes b), c) et g) ci-dessus ne seraient plus nécessaires.

Toutefois, transmettre du drone vers la station au sol une image entière de la scène sur 360° avec la définition souhaitée nécessite une bande passante importante, incompatible avec le débit pratique, relativement limité, du canal de transmission entre le drone et la station au sol.

Un but de l'invention est de proposer un système de prise de vues qui permette d'améliorer significativement l'expérience de pilotage d'un drone en mode FPV avec des lunettes de réalité virtuelle, en diminuant les latences constatées lors des mouvements, parfois brusques, de la tête de l'utilisateur.

L'invention propose à cet effet un système de pilotage de drone en immersion comprenant, de manière en elle-même connue notamment d'après le EP 2 557 468 A2 précité, un drone doté de moyens de prise de vues et une station au sol comprenant : des lunettes de réalité virtuelle restituant des images prises à l'aide des moyens de prise de vues et transmises à partir du drone par des moyens de communication sans fil ; des moyens de détection des changements de l'orientation de la tête d'un utilisateur portant les lunettes ; ainsi que des moyens de traitement graphique au sol aptes à générer les images restituées.

Le système comprend également des moyens pour générer à bord du drone une première image dite image "point de vue" et pour transmettre cette première image aux moyens de traitement graphique au sol, et des moyens prévus dans le drone pour modifier l'axe de visée de l'image "point de vue" en réponse à des changements de position de la tête de l'utilisateur détectés par les moyens de détection et transmis au drone via les moyens de communication sans fil.

De façon caractéristique de l'invention, le système comprend en outre des moyens pour générer à bord du drone une deuxième image dite image "vol d'oiseau" dont le champ est plus large et dont la définition angulaire est plus basse que l'image "point de vue", et pour transmettre cette deuxième image aux moyens de traitement graphique au sol. Les moyens de traitement graphique au sol sont en outre aptes à générer localement pendant un mouvement de la tête de l'utilisateur, par une combinaison des images "point de vue" et "vol d'oiseau" courantes présentes dans la station au sol, des images à restituer de contours ajustés en fonction des changements de position détectés par les moyens de détection.

On notera que, concrètement, les deux images "point de vue" et "vol d'oiseau" peuvent être des images distinctes, mais aussi, et de manière équivalente, être fusionnées en une seule et même image globale dont la résolution angulaire est plus grande dans une zone "point de vue" (qui équivaut alors à l'image "point de vue") que dans le reste de l'image globale (qui équivaut alors à l'image "vol d'oiseau").

Le système comprend également, facultativement, les caractéristiques avantageuses suivantes, prises individuellement ou en toutes combinaisons que l'homme du métier reconnaitra comme techniquement compatibles :
- les moyens de traitement graphique au sol sont aptes à réaliser une incrustation de l'image "point de vue" courante dans l'image "vol d'oiseau" courante et à appliquer des recadrages variables à l'image ainsi obtenue ;
- les moyens de prise de vues comprennent un ensemble de caméras de prise de vue à champs larges d'axes de visée différents ;
- les moyens de prise de vues comprennent des caméras de définitions différentes pour les images "point de vue" et les images "vol d'oiseau".
- les moyens de prise de vues comprennent un ensemble commun de caméras ayant toutes la même définition, et des circuits de génération d'images de définition différentes à partir de l'ensemble commun de caméras ;
- le système comprend un ensemble de caméras de champs complémentaires couvrant ensemble toutes les directions dans un plan horizontal ;
- le système comprend une première caméra dont l'axe de visée est agencé selon un axe principal du drone, et deux caméras de définitions plus basses dont les axes de visée sont orientés respectivement vers la gauche et vers la droite par rapport à l'axe principal ;
- les deux caméras de définitions plus basses sont à champs complémentaires couvrant ensemble toutes les directions dans un plan horizontal ;
- au moins certaines caméras possèdent des optiques de type *fisheye,* et il est prévu des moyens de correction des distorsions générés par ce type d'optique.

On va maintenant décrire un exemple de mise en oeuvre de l'invention, en référence aux dessins annexés où les mêmes références désignent d'une figure à l'autre des éléments identiques ou fonctionnellement semblables.
La Figure 1 illustre schématiquement un agencement de trois caméras de prise de vues pouvant être utilisé dans le système de l'invention.
La Figure 2 illustre, pour chaque caméra, la zone de son capteur qui est effectivement exploitée.
La Figure 3 illustre schématiquement deux types d'images transmises par l'ensemble de caméras des Figures 1 et 2.
La Figure 4 illustre schématiquement la combinaison de parties des deux images lorsque dans le présent exemple il est détecté que le porteur de lunettes FPV tourne la tête vers la gauche.
Les Figures 5A et 5B illustrent deux combinaisons de parties d'images lors de la détection d'une rotation rapide de la tête vers la gauche.
Les Figures 6A à 6C représentent une image réelle et, pour ce qui concerne les Figures 6B et 6C, deux combinaisons d'images selon le principe de la Figure 4 pour deux positions différentes de la tête de l'utilisateur.
La Figure 7 est un schéma par blocs des différentes fonctionnalités mises en oeuvre dans une circuiterie électronique embarquée dans le drone.
La Figure 8 est un schéma par blocs des différentes fonctionnalités mises en oeuvre dans une circuiterie électrique au sol, associée aux lunettes.
Les Figures 9A à 9C illustrent schématiquement d'autres agencements de caméras pouvant être utilisés dans le système de la présente invention.
◊

Un système de prise de vues en "mode immersif" ou "FPV" selon la présente invention comprend un drone équipé d'un ensemble de caméras de prise de vues, et un équipement au sol communiquant par une liaison sans fil de portée appropriée avec le drone et comprenant des lunettes de réalité virtuelle, dotées de moyens de restitution devant les yeux de l'utilisateur d'images lui donnant la sensation de voler à bord du drone, de la façon la plus réaliste possible.

Les caméras équipant le drone sont des caméras à champ large, telles que des caméras avec optique de type *fisheye,* c'est-à-dire munies d'un objectif à champ hémisphérique couvrant un champ d'environ 180°.

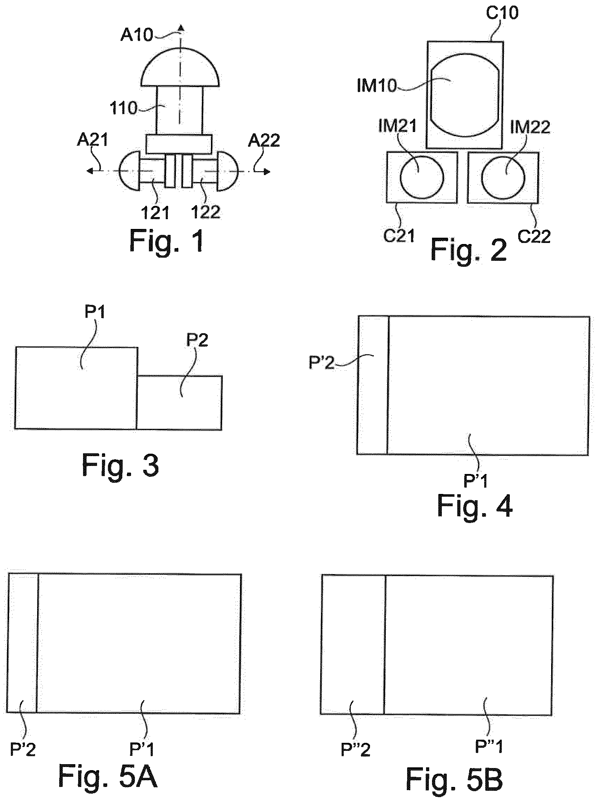

Dans une première forme de réalisation de l'invention, et en référence à la Figure 1, le drone 10 possède trois caméras de prises de vues 110, 121 et 122.

Une première caméra ou caméra principale 110 possède un objectif de type *fisheye* dont l'axe de visée A10 est dirigé vers l'avant. Elle dispose d'un grand capteur avec un nombre de pixels important, typiquement de 8 à 20 Mpixel avec les technologies actuelles.

Comme l'illustre la Figure 2, l'optique *fisheye* de la caméra principale 110 génère une image de contour circulaire IM10 pour la caméra principale, dont le cercle limite déborde de préférence latéralement par rapport aux limites rectangulaires du capteur C10, de manière à favoriser le nombre des pixels exposés, à optimiser l'occupation de la surface du capteur, qui est en règle générale dans le rapport 4/3, et à favoriser la prise de vue dans une direction de haut en bas.

Le drone possède en outre deux caméras auxiliaires 121, 122 pointant dans le présent exemple sur chacun des deux côtés du drone comme le montre la Figure 1, avec des angles de visée A21, A22 colinéaires et opposés. Ces caméras sont également équipées de lentilles *fisheye,* mais possèdent des capteurs C21, C22 de plus petites dimensions munis de lentilles également plus petites. Pour ces caméras, comme l'illustre également la Figure 2, le cercle image, respectivement IM21, IM22, est intégralement contenu dans l'étendue du capteur respectif C21, C22. Typiquement, on utilise pour les capteurs C21, C22 des capteurs d'une définition de l'ordre de 3 Mpixel avec les technologies actuelles, du type utilisé pour des caméras à haute définition intégrale (*full HD*). Dans le présent exemple, environ 1,8 Mpixel sont effectivement illuminés par la lentille *fisheye* respective.

Comme on le verra plus loin, les deux caméras auxiliaires peuvent avoir n'importe quelle orientation, pour autant que leurs axes de visée respectifs soient essentiellement opposés, un but en particulier étant que la jointure entre les deux images, couvrant chacune de l'ordre d'une demi-sphère, se situe à l'endroit le moins gênant pour la vision et/ou pour les traitements à effectuer. On peut prévoir par ailleurs de ne pas couvrir la zone angulaire située proche de la verticale vers le haut, la moins utile. Par exemple, la partie de l'image au-dessus de 70° vers le haut peut être négligée.

À partir de cet ensemble de caméras, la circuiterie électronique du drone transmet à la station au sol deux images destinées à être traitées comme on va le voir pour une restitution combinée aux afficheurs oculaires d'une paire de lunettes de réalité virtuelle.

Une première image P1, dite image "point de vue", est celle prise par la caméra 110, reflétant le point de vue d'un pilote virtuel du drone, et une seconde image P2, dite image "vol d'oiseau", est celle, combinée par la circuiterie électronique embarquée, issue des deux caméras latérales 121 et 122. La première image est une image en pleine définition correspondant à un champ de vision limité, tandis que la seconde image est une image de plus faible résolution sur un champ de vision de 360° horizontalement, et de 360° ou légèrement moins verticalement.

On notera que les distances focales des trois caméras sont toutes identiques de façon à pouvoir réaliser une superposition des deux images entre elles sans anomalies.

La Figure 3 reflète par la taille des images P1 et P2 l'encombrement lié à la résolution angulaire par pixel de ces images, l'image P1 étant plus encombrante en termes de bande passante que l'image P2, représentée par conséquent avec une plus petite taille.

On notera que l'invention peut être avantageuse dans un cas où l'on utilise une image VGA (640x480) pour la zone "point de vue" d'environ 90° x 90° de champ de vision, et une autre image VGA pour tout le reste (champ de vision de 360° x 360°).

On va maintenant décrire les différentes étapes mises en oeuvre dans un système selon l'invention pour obtenir dans les lunettes de réalité virtuelle une image reflétant une expérience de type FPV.

### Génération et transmission de l'image "point de vue" P1

Cette étape met en oeuvre les opérations suivantes :
1) un capteur (accéléromètre ou autre) équipant les lunettes mesure les mouvements de la tête de l'utilisateur ;
2) les informations de position de la tête de l'utilisateur sont envoyées périodiquement à la circuiterie du drone à partir de celle de la station au sol via par le canal de communication sans fil, avec une cadence correspondant typiquement à celle des images à restituer, par exemple au moins 30 fois par seconde ;
3) à bord du drone, le nouvel axe de visée pour l'image "point de vue" est défini en fonction desdites informations reçues de position de la tête ;
4) chaque image prise par la caméra est recadrée en fonction de cet axe de visée pour générer l'image P1 ;
5) dans la circuiterie du drone, cette image est si nécessaire retraitée afin de compenser la distorsion induite par l'objectif *fisheye* (un tel traitement est connu en soi et ne sera pas décrit plus en détail) ;
6) l'image ainsi retraitée est codée, de préférence avec compression, avec un algorithme approprié ;
7) l'image compressée est transmise à la station au sol via le canal de communication sans fil.

Ces opérations sont répétées par exemple à une cadence de 30 images par seconde, avec à chaque fois une mise à jour de l'axe de visée A10 de la caméra 110 et le recadrage correspondant.

On notera ici qu'en variante, on pourrait prévoir une caméra 110 déplaçable en réponse à des actionneurs pour ajuster son axe de visée physique en réponse aux informations de position de la tête.

Selon une autre variante, l'image point de vue peut, de la même manière que l'image "vol d'oiseau", être générée en combinant les images prises par deux ou plusieurs caméras orientées différemment.

### Génération et transmission de l'image "vol d'oiseau" P2

Cette étape met en oeuvre les opérations suivantes :
1) deux images sont acquises à l'aide des deux caméras latérales 121 et 122 ;
2) les deux images sont combinées en une seule image par la circuiterie électronique embarquée ;
3) l'image ainsi combinée est codée, de préférence avec compression, avec un algorithme approprié ;
4) l'image compressée est transmise à la station au sol via le canal de communication sans fil.

### Traitement des images dans la station au sol

Aussi longtemps que l'utilisateur ne bouge pas la tête, la station au sol affiche dans les lunettes les images "point de vue" P1 en haute définition, transmises en flux à partir du drone. Une cadence de 30 images par seconde est ici possible car aucun traitement de recadrage de l'image prise par la caméra 110 n'est nécessaire.

Mais lorsque l'utilisateur tourne la tête, l'ensemble d'étapes du processus ci-dessus de génération et de transmission de l'image "point de vue" nécessite un temps de traitement qui, comme on l'a expliqué plus haut, est incompatible avec la cadence d'images recherchée à cause des recadrages de l'image P1 à réaliser pour chaque image individuelle.

Selon l'invention, la circuiterie électronique de la station construit pour les besoins de la transition (c'est-à-dire jusqu'à ce que la tête de l'utilisateur soit à nouveau fixe) des images de transition à partir des images P1 et P2 les plus fraîches disponibles à ce moment-là dans la station au sol, et des coordonnées des lunettes de réalité virtuelle. Ces images de transition sont créées à partir de données entièrement disponibles côté station au sol et lunettes, par combinaison et recadrage comme on va le voir ci-dessous. Sachant qu'aucun transfert via le canal de communication n'est nécessaire et que seuls un recadrage et un rafraichissement de l'affichage sont à effectuer, la latence pour cette opération peut être extrêmement faible.

On comprend que l'image P2 de champ plus large provenant des caméras latérales 121, 122 pourrait être simplement recadrée au sol et restituée pour assurer la transition recherchée. Mais cette image P2 possède une définition plus basse que l'image "point de vue" normalement générée avec la caméra 110, et une telle solution engendrerait une baisse brutale de résolution de l'ensemble de l'image lors de la restitution de la transition.

Pour éviter ce phénomène, on effectue une combinaison d'images avec le processeur graphique équipant la station au sol.

Ainsi, la Figure 4 illustre une combinaison d'images correspondant au cas où l'utilisateur a tourné la tête vers la gauche. Dans ce cet exemple, l'image à restituer est obtenue en combinant d'une part une fraction P'1 de l'image "point de vue" P1 obtenue en éliminant une partie marginale située à droite, dont la largeur est d'autant plus grande que l'angle de rotation de la tête de l'utilisateur est important, et en complétant l'image ainsi réduite P'1, sur son bord gauche, avec une fraction P'2 de l'image "vol d'oiseau" correspondant à cette zone.

Cette combinaison de fractions d'images est ainsi effectuée par des opérations simples de recadrages et de juxtaposition, connaissant l'amplitude angulaire de la rotation latérale de la tête et connaissant également, par construction, la correspondance entre le référentiel de l'image P1 et celui de l'image P2.

Ainsi, la plus grande partie de l'image restituée à l'utilisateur reste en haute définition, et seule une partie marginale de l'image est en définition plus basse, et ceci de façon temporaire seulement tant que l'orientation de la tête de l'utilisateur ne s'est pas stabilisée.

Il est à noter que la cadence à laquelle ces recadrages/juxtapositions sont effectués peut être décorrélée de la cadence de réception des images "point de vue" en haute définition (typiquement 30 images par seconde avec les technologies actuelles), et être plus élevée. Notamment, les lunettes de réalité virtuelle sont capables d'effectuer une restitution à une cadence de 75 images par seconde ou davantage, et les traitements de recadrage/juxtaposition susmentionnés étant suffisamment légers en termes de charge de processeur graphique, cette cadence est atteignable.

Pendant toute la période de transition, cette génération d'images juxtaposées va être réalisée en fonction de la position courante de la tête de l'utilisateur. Ainsi, les figures 5A et 5B illustrent le cas simplifié où la station au sol génère et affiche deux combinaisons successives de fractions, respectivement P'1, P'2 et P"1, P"2, des images P1 et P2 disponibles au sol, la fraction P"2 étant plus large que la fraction P'2 du fait qu'entre les deux instants, la tête de l'utilisateur a continué à tourner.

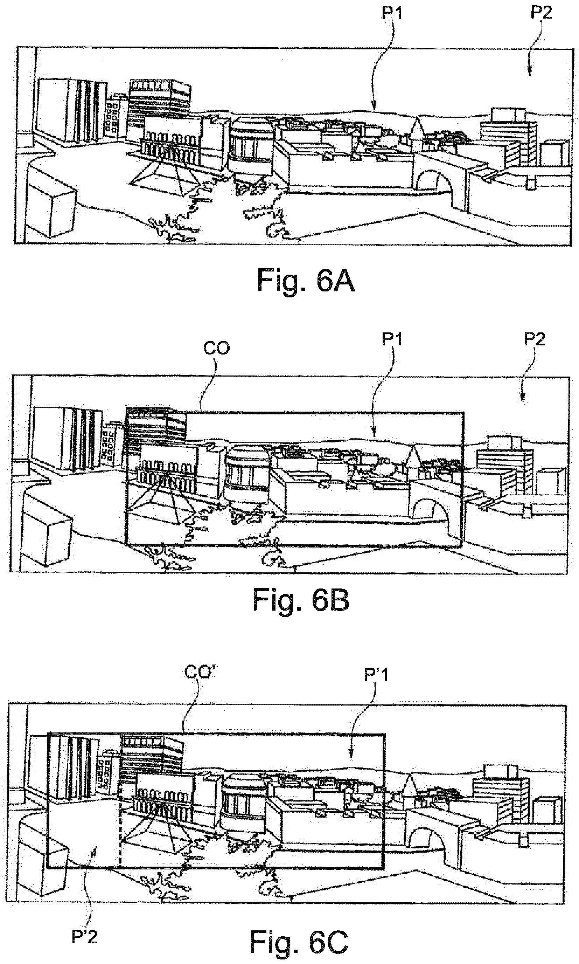

On va maintenant expliquer en référence aux Figures 6A à 6C la mise en oeuvre de l'invention sur des images réelles.

L'image de la Figure 6A correspond à une incrustation de l'image "point de vue" P1, à haute définition, dans une image "vol d'oiseau" P2 de la même scène mais de champ plus large et de définition moindre, les axes des deux images étant confondues. Cette incrustation est réalisée dans la station au sol, et joue en fait le rôle de la juxtaposition des images telle qu'expliquée dans ce qui précède.

Aussi longtemps que l'utilisateur garde la tête droite, l'image restituée dans les lunettes de réalité virtuelle est l'image "point de vue" P1 seule, dont les contours CO sont illustrés sur la Figure 6B.

Lorsque l'utilisateur tourne la tête, dans le présent exemple vers la gauche, le contour de l'image effectivement restituée à l'utilisateur (noté ici CO') est déplacé vers la gauche, et on comprend que l'image restituée à l'utilisateur correspond bien à une combinaison d'une fraction P'1 de l'image P1, privée d'une bande d'une largeur déterminée à droite, et d'une fraction P'2 de l'image P2 située immédiatement à gauche de l'image P1 (la frontière entre ces deux fractions d'image étant indiquée en tiretés sur la figure 6B).

Certes, la partie gauche de l'image est de moins haute définition, mais elle a l'avantage d'être immédiatement disponible pour être combinée à l'image P1 tronquée, puis affichée. Il en résulte une latence imperceptible et une qualité d'image tout à fait correcte pour l'utilisateur.

Bien entendu, les informations de rotation de la tête étant envoyées à la circuiterie électronique du drone pour ajuster en conséquence l'axe de visée A10 de la caméra 110, et restituer à la station au sol la nouvelle vue générée par la caméra 110, qui sera alors restituée dans les lunettes aussi longtemps que les mouvements de la tête de l'utilisateur sont suffisamment lents pour autoriser une bonne fluidité sans avoir à effectuer les traitements de recadrage/combinaison décrits.

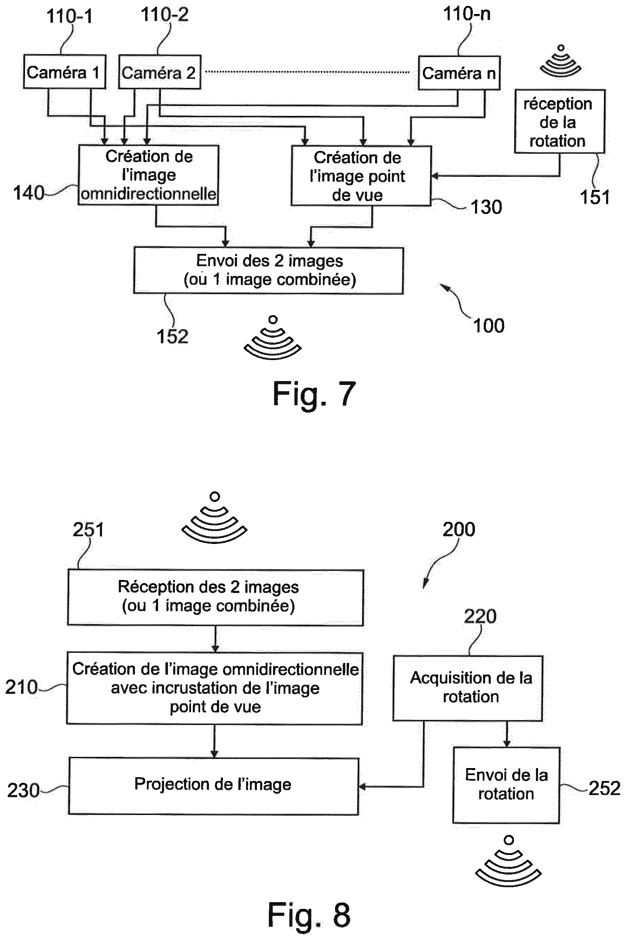

La Figure 7 illustre sous forme d'un schéma-bloc une possibilité d'implémentation de la présente invention côté drone 100.

En premier lieu, il est à noter qu'au lieu de prévoir des caméras dédiées pour la fonction "point de vue" et pour la fonction "vol d'oiseau", une même caméra peut participer aussi bien à la génération d'une image "point de vue" qu'à la génération d'une image "vol d'oiseau".

Dans ce cas, la caméra 110, unique dans la forme de réalisation précédente décrite jusqu'ici, peut être remplacée par un ensemble de caméras. Ainsi la figure 7 représente schématiquement n caméras 110-1 à 110-n. Les sorties de ces caméras sont reliées d'une part à un circuit 130 de génération d'une image "point de vue", et d'autre part à un circuit 140 de génération d'une image "vol d'oiseau". Le circuit 140 ne prend en compte qu'une partie des pixels par rapport au circuit 130, pour générer une image de définition plus basse que le circuit 130.

Le circuit de communication sans fil avec la station au sol reçoit au niveau de sa partie réception 151 les informations, absolues ou relatives, de position de la tête de l'utilisateur, et appliqué ces informations au circuit de génération de l'image "point de vue" pour ajuster, ici par traitement numérique d'une image combinée, de champ plus large que celui effectivement restitué, l'axe de visée pour l'image P1 à restituer.

Les images issues des circuits 130 et 140 sont envoyées à la station au sol par la partie émission 152 du circuit de communication sans fil.

On notera que pour la mise en oeuvre de l'invention, ces images peuvent être envoyées soit séparément, soit de façon combinée.

La Figure 8 illustre quant à elle de façon schématique les éléments prévus dans la station au sol 200 pour implémenter l'invention. La partie réception 251 du circuit de communication sans fil reçoit du drone les images P1 et P2, soit séparées, soit combinées. Un circuit de traitement graphique 210 engendre à partir des images reçues une image du type de celle de la Figure 6A, avec l'image "point de vue", à haute définition, incrustée dans l'image "vol d'oiseau".

Un dispositif 220 d'acquisition de la rotation de la tête de l'utilisateur, qui équipe conventionnellement des lunettes de réalité virtuelle auxquelles la station au sol est reliée, délivre ces informations à un circuit de traitement graphique 230 apte à réaliser les recadrages (la juxtaposition étant dans ce cas déjà réalisée par l'incrustation par le circuit 210, comme expliqué), en fonction des informations de position reçues des lunettes.

On notera ici que dans la pratique, les circuits 210 et 230 peuvent être constitués par un même circuit.

Parallèlement, la partie émission 252 du circuit de communication sans fil de la station au sol envoie au drone les informations de position de la tête de l'utilisateur pour mise à jour de l'axe de visée de l'image "point de vue" P1, comme expliqué plus haut.

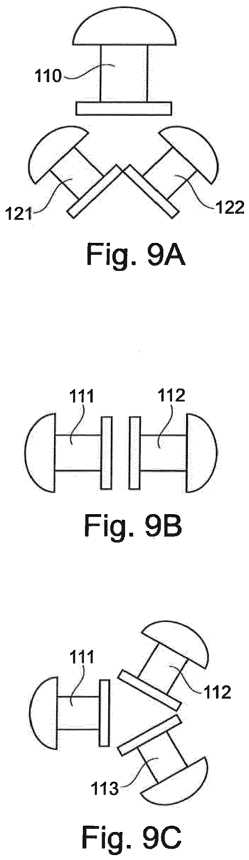

En référence maintenant aux Figures 9A à 9C, on a illustré d'autres configurations possibles d'un jeu de caméras équipant le drone.

Sur la Figure 9A, on a représenté schématiquement une caméra "point de vue" 110 visant dans l'axe du drone, et deux caméras "vol d'oiseau" dont les axes de visée ne sont pas opposés comme dans le cas de la Figure 1, mais obliques vers la gauche et vers la droite (vers l'avant). Certes, ceci limite le champ des possibilités, notamment si l'utilisateur toute entièrement la tête vers l'arrière, mais permet de disposer d'une image "vol d'oiseau" de meilleure qualité à bande passante constante.

La Figure 9B illustre le recours à seulement deux caméras 111, 112, visant vers la gauche et vers la droite. Dans ce cas, la plupart des images "point de vue" seront issues d'une combinaison des images prises par les deux caméras. En variante, on peut prévoir seulement deux caméras visant respectivement vers l'avant et vers l'arrière.

Enfin, la Figure 9C illustre le recours à trois caméras 111, 112, 113 de résolutions identiques dont les axes de visée physiques sont mutuellement espacés de 120°. De préférence, l'une de ces caméras vise vers l'avant. Bien entendu, la présente invention n'est nullement limitée aux formes de réalisation décrites et représentées, et l'homme du métier saura y apporter de nombreuses variantes et modifications. Elle s'applique à des drones de types variés, d'inspection, de loisirs ou autres, à vol stationnaire ou non. Elle s'applique également à différents types de lunettes de réalité virtuelle, à électronique embarquée ou déportée.

## Revendications

1. Un système de pilotage de drone en immersion, comprenant :
- un drone (100) doté de moyens de prise de vues (110, 121, 122) et
- une station au sol (200) comprenant :
des lunettes de réalité virtuelle restituant des images prises à l'aide des moyens de prise de vues et transmises à partir du drone par des moyens de communication sans fil ;
des moyens (220) de détection des changements de l'orientation de la tête d'un utilisateur portant les lunettes ; ainsi que
des moyens (210, 230) de traitement graphique au sol aptes à générer les images restituées,
- des moyens (110, 121, 122, 130, 140) pour générer à bord du drone une première image dite image "point de vue" et pour transmettre cette première image aux moyens de traitement graphique au sol ; et
- des moyens (151, 130) prévus dans le drone pour modifier l'axe de visée de l'image "point de vue" en réponse à des changements de position de la tête de l'utilisateur détectés par les moyens de détection et transmis au drone via les moyens de communication sans fil (151, 252),
le système étant **caractérisé en ce qu'**il comprend en outre :
- des moyens (110, 121, 122, 130, 140) pour générer à bord du drone une deuxième image dite image "vol d'oiseau" dont le champ est plus large et dont la définition angulaire est plus basse que l'image "point de vue", et pour transmettre cette deuxième image aux moyens de traitement graphique au sol ; et
et **en ce que** les moyens de traitement graphique au sol (210, 230) sont aptes à générer localement pendant un mouvement de la tête de l'utilisateur, par une combinaison des images "point de vue" et "vol d'oiseau" courantes présentes (P1, P2) dans la station au sol, des images à restituer (P'1-P'2, P"1-P"2) de contours (CO') ajustés en fonction des changements de position détectés par les moyens de détection.

2. Le système de la revendication 1, dans lequel les moyens (210, 230) de traitement graphique au sol sont aptes à réaliser une incrustation de l'image "point de vue" courante (P1) dans l'image "vol d'oiseau" courante (P2) et à appliquer des recadrages variables à l'image ainsi obtenue.

3. Le système de la revendication 1, dans lequel les moyens de prise de vues comprennent un ensemble de caméras de prise de vue à champs larges d'axes de visée différents (110, 121, 122 ; 110-1-11 On; 111, 112 ; 111-113).

4. Le système de la revendication 3, dans lequel les moyens de prise de vues comprennent des caméras de définitions différentes (110 ; 121, 122) pour les images "point de vue" et les images "vol d'oiseau".

5. Le système de la revendication 3, dans lequel les moyens de prise de vues comprennent un ensemble commun de caméras (110-1-110n) ayant toutes la même définition, et des circuits de génération d'images de définitions différentes (130, 140) à partir de l'ensemble commun de caméras.

6. Le système de la revendication 3, comprenant un ensemble de caméras de champs complémentaires (111, 112 ; 121-122 ; 111-113) couvrant ensemble toutes les directions dans un plan horizontal.

7. Le système de la revendication 4, comprenant une première caméra (110) dont l'axe de visée est agencé selon un axe principal du drone, et un ensemble de caméras (121, 122) de définitions plus basses avec des axes de visée orientés vers la gauche et vers la droite par rapport à l'axe principal.

8. Le système de la revendication 7, dans lequel les caméras de définitions plus basses (121, 122) sont à champs complémentaires couvrant ensemble toutes les directions dans un plan horizontal.

9. Le système de la revendication 3, dans lequel au moins certaines caméras possèdent des optiques de type *fisheye,* et dans lequel il est prévu des moyens de correction des distorsions générées par ce type d'optique.

## Patentansprüche

1. System zum Tauchsteuern einer Drohne, umfassend:
- eine Drohne (100), die mit Aufnahmemitteln (110, 121, 122) versehen ist, und
- eine Bodenstation (200), umfassend:
eine Virtuelle-Realitäts-Brille zur Wiedergabe von Bildern, die mit Hilfe der Aufnahmemittel aufgenommen und von der Drohne über drahtlose Kommunikationsmittel gesendet werden;
Mittel (220) zum Detektieren der Veränderungen in der Ausrichtung des Kopfes eines Benutzers, der die Brille trägt; sowie
Mittel (210, 230) zur Bildverarbeitung am Boden, die zur Erzeugung der wiedergegebenen Bilder eingerichtet sind,
- Mittel (110, 121, 122, 130, 140), um an Bord der Drohne ein erstes Bild, so genanntes "Standpunktbild", zu erzeugen und um dieses erste Bild an die Bildverarbeitungsmittel am Boden zu senden; und
- Mittel (151, 130), die in der Drohne vorgesehen sind, um die Sichtachse des "Standpunktbilds" in Reaktion auf Veränderungen in der Position des Kopfes des Benutzers, die von den Detektionsmitteln detektiert und über die drahtlosen Kommunikationsmittel (151, 252) gesendet werden, zu ändern,
wobei das System **dadurch gekennzeichnet ist, dass** es ferner umfasst:
- Mittel (110, 121, 122, 130, 140), um an Bord der Drohne ein zweites Bild, so genanntes "Vogelflugbild", zu erzeugen, dessen Sichtfeld breiter ist und dessen Winkelauflösung niedriger ist als das "Standpunktbild", und um dieses zweite Bild an die Bildverarbeitungsmittel am Boden zu senden; und
und dass die Bildverarbeitungsmittel am Boden (210, 230) eingerichtet sind, um lokal während einer Bewegung des Kopfes des Benutzers, durch eine Kombination des aktuellen "Standpunktbildes" und "Vogelflugbildes" (P1, P2), die in der Bodenstation vorhanden sind, Bilder (P'1-P'2, P"1-P"2) zu erzeugen, die wiederzugeben sind mit Konturen (CO'), die in Abhängigkeit von den Veränderungen in der Position, die durch die Detektionsmittel detektiert werden, angepasst sind.

2. System nach Anspruch 1, wobei die Bildverarbeitungsmittel am Boden (210, 230), dazu eingerichtet sind, eine Einblendung des aktuellen "Standpunktbildes" (P1) in dem aktuellen "Vogelflugbild" (P2) zu realisieren und auf das so erhaltene Bild variable Neuzuschnitte anzuwenden.

3. System nach Anspruch 1, wobei die Aufnahmemittel eine Anordnung von Aufnahmekameras mit breiten Sichtfeldern unterschiedlicher Sichtachsen (110, 121, 122; 110-1-110n; 111, 112; 111-113) umfassen.

4. System nach Anspruch 3, wobei die Aufnahmemittel Kameras unterschiedlicher Auflösungen (110; 121, 122) für die "Standpunktbilder" und die "Vogelflugbilder" umfassen.

5. System nach Anspruch 3, wobei die Aufnahmemittel eine gemeinsame Anordnung von Kameras (110-1-110n), die allesamt die gleiche Auflösung haben, und Schaltungen zur Erzeugung von Bildern unterschiedlicher Auflösungen (130, 140) ausgehend von der gemeinsamen Kameraanordnung umfassen.

6. System nach Anspruch 3, umfassend eine Anordnung von Kameras mit komplementären Sichtfeldern (111, 112; 121-122; 111-113), die zusammen sämtliche Richtungen in einer horizontalen Ebene abdecken.

7. System nach Anspruch 4, umfassend eine erste Kamera (110), deren Sichtachse gemäß einer ersten Hauptachse der Drohne vorgesehen ist, und eine Anordnung von Kameras (121, 122) niedriger Auflösungen mit Sichtachsen, die relativ zu der Hauptachse nach links und nach rechts orientiert sind.

8. System nach Anspruch 7, wobei die Kameras niedriger Auflösungen (121, 122) komplementäre Sichtfelder haben, die zusammen sämtliche Richtungen in einer horizontalen Ebene abdecken.

9. System nach Anspruch 3, wobei mindestens bestimmte Kameras Fisheye-Optiken aufweisen und wobei Mittel zur Korrektur der durch diesen Optiktyp erzeugten Verzerrungen vorgesehen sind.

## Claims

1. A system for piloting in immersion a drone, comprising:
- a drone (100) provided with imaging means (110, 121, 122) and
- a ground station (200) comprising:
• virtual reality glasses rendering images taken by means of the imaging means and transmitted from the drone via wireless communication means;
• means (220) for detecting the changes of orientation of the head of a user wearing the glasses; as well as
• ground graphics processing means (210, 230) adapted to generate the images that are rendered;
- means (110, 121, 122, 130, 140) for generating on board the drone a first image called "viewpoint" image and for transmitting this first image to the ground graphics processing means; and
- means (151, 130) provided in the drone for modifying the axis of sight of the "viewpoint" image in response to changes of position of the user's head detected by the detection means and transmitted to the drone via the wireless communication means (151,252),
the system being **characterized in that** it further includes:
- means (110, 121, 122, 130, 140) for generating on board the drone a second image called "bird's-eye" image, whose field is wider and whose angular definition is lower than those of the "viewpoint" image, and for transmitting this second image to the ground graphics processing means; and
**in that** the ground graphics processing means (210, 230) are adapted to locally generate during a movement of the user's head, by a combination of the current "viewpoint" and "bird's-eye" images (P1, P2) present in the ground station, images to be rendered (P'1-P'2, P"1-P"2) of contours (CO') adjusted as a function of the changes of position detected by the detection means.

2. The system of claim 1, wherein the ground graphics processing means (210, 230) are adapted to perform an inlay of the current "viewpoint" image (P1) into the current "bird's-eye" image (P2) and to apply variable cropping operations to the so-obtained image.

3. The system of claim 1, wherein the imaging means comprise a set of wide-angle imaging cameras of different axes of sight (110, 121, 122; 110-1-110n; 111, 112; 111-113).

4. The system of claim 3, wherein the imaging means comprise cameras of different definitions (110; 121, 122) for the "viewpoint" images and the "bird's-eye" images.

5. The system of claim 3, wherein the imaging means comprise a common set of cameras (110-1-110n) all having the same definition, and circuits for generating images of different definitions (130, 140) from the common set of cameras.

6. The system of claim 3, comprising a set of cameras of complementary fields (111, 112; 121-121; 111-113) covering together all the directions in a horizontal plane.

7. The system of claim 4, comprising a first camera (110) whose axis of sight is arranged along a main axis of the drone, and a set of cameras (121, 122) of lower definitions with axes of sight directed towards the left and towards the right with respect to the main axis.

8. The system of claim 7, wherein the cameras of lower definitions (121, 122) are of complementary fields covering together all the directions in a horizontal plane.

9. The system of claim 3, wherein at least certain cameras have optical systems of the fisheye type, and wherein means for correcting the distortions generated by this type of optical system are provided.
